# EUROPEAN PATENT APPLICATION

(11) **EP 4 383 811 A1**
(43) Date of publication of application: **12.06.2024**
(21) Application number: 22851953.4
(22) Date of filing: 26.07.2022
(51) Int. Cl.: H04W 36/00

(54) **REPORT PROCESSING METHOD AND APPARATUS, NETWORK NODE AND TERMINAL**

(30) Priority: 05.08.2021 CN 202110895728
(71) Applicant: Datang Mobile Communications Equipment Co., Ltd., Beijing 100085 (CN)
(72) Inventor: WANG, Ruiwei, Beijing 100085 (CN); LIU, Aijuan, Beijing 100085 (CN)
(74) Representative: Studio Torta S.p.A.
(86) International application number: PCT/CN2022/107741
(87) International publication number: WO 2023/011239

(57) **Abstract**

A report processing method, a report processing device, a network node and a UE are provided. The report processing method includes: obtaining RLF reports and successful handover reports; determining the RLF report and the successful handover report that have an association relationship; and analyzing a cause for an RLF or a cause for a handover failure in accordance with the determined RLF report and successful handover report that have the association relationship.

## Description

### CROSS-REFERENCE TO RELATED APPLICATION

This application claims the priority of the Chinese patent application No.202110895728.5 filed in China on August 5, 2021, which is incorporated herein by reference in its entirety.

### TECHNICAL FIELD

The present disclosure relates to the field of wireless technology, in particular to a report processing method, a report processing device, a network node and a User Equipment (UE).

### BACKGROUND

In a Dual Active Protocol Stack (DAPS) handover procedure, a terminal probably successfully hands over to a target side after a Radio Link Failure (RLF) occurs at a source side, and at this time, RLF information at the source side is recorded in a successful handover report and transferred between network nodes through an access and mobility indication message. In addition, a random access failure probably occurs at the target side to which the terminal hands over or an RLF occurs after the successful random access, and at this time, RLF information at the target side is recorded in an RLF report and transferred between the network nodes through a failure indication message. The source side is a node before the terminal performs the DAPS handover, and the target side is a node after the terminal has performed the DAPS handover.

The network node, as the source side in a DAPS handover scenario, may receive the successful handover report and the RLF report through the access and mobility indication message and the failure indication message, and thereby analyzes the successful handover report and the RLF report. It is found through researches that, an analysis result is inaccurate when a failure type is analyzed in accordance with the received successful handover report and RLF report.

### SUMMARY

An object of the present disclosure is to provide a report processing method, a report processing device, a network node and a UE, so as to solve at least one of the above-mentioned problems.

In one aspect, the present disclosure provides in some embodiments a report processing method for a UE, including: generating an RLF report and a successful handover report, the RLF report carrying a UE Identity (ID), the successful handover report carrying the UE ID, the successful handover report being generated after the UE has successfully performed DAPS handover, the RLF report being generated after the UE is subjected to an RLF, wherein the UE is subjected to the RLF after the UE has successfully performed the DAPS handover; and transmitting the generated RLF report and successful handover report to a network device.

In another aspect, the present disclosure provides in some embodiments a report processing method for a first network node, including: obtaining RLF reports and successful handover reports; determining an RLF report and a successful handover report that have an association relationship; and analyzing a cause for an RLF or a cause for a handover failure in accordance with the determined RLF report and successful handover report that have the association relationship.

Optionally, the obtaining the RLF reports and the successful handover reports includes receiving RLF reports and successful handover reports transmitted by a second network node through first interface messages, the second network node is a node after a UE has performed DAPS handover, the first network node is a node before the UE performs the DAPS handover, the RLF report is obtained by the second network node from another network node, and the other network node is a network node to which the UE is reconnected after the UE is subjected to the RLF, wherein the UE is subjected to the RLF after the UE has successfully performed the DAPS handover. The determining the RLF report and the successful handover report that have the association relationship includes determining an RLF report and a successful handover report transmitted in one of the first interface messages as the RLF report and the successful handover report that have the association relationship.

Optionally, the determining the RLF report and the successful handover report transmitted in one of the first interface messages as the RLF report and the successful handover report that have the association relationship includes, when RLF reports and successful handover reports generated by different UEs are carried in one of the first interface messages, determining an RLF report and a successful handover report generated by a same UE as the RLF report and the successful handover report that have the association relationship.

Optionally, the obtaining the RLF reports and the successful handover reports includes obtaining the RLF reports through a second interface message and obtaining the successful handover reports through a third interface message. The determining the RLF report and the successful handover report that have the association relationship includes: determining an RLF report corresponding to a first UE ID in accordance with the first UE ID carried in the second interface message, and determining a successful handover report corresponding to a second UE ID in accordance with the second UE ID carried in the third interface message; and when the first UE ID is the same as the second UE ID, determining the RLF report corresponding to the first UE ID and the successful handover report corresponding to the second UE ID as the RLF report and the successful handover report that have the association relationship.

Optionally, the first interface message, the second interface message and the third interface message are each at least one of a failure indication message, a handover report message, an access and mobility indication message, or a specific message.

Optionally, the obtaining the RLF reports and the successful handover reports specifically includes obtaining the RLF reports and the successful handover reports transmitted by a UE, the RLF reports carry UE IDs, and the successful handover reports carry UE IDs. The determining the RLF report and the successful handover report that have the association relationship specifically includes determining an RLF report and a successful handover report carrying a same UE ID as the RLF report and the successful handover report that have the association relationship in accordance with the UE IDs carried in the RLF reports and the UE IDs carried in the successful handover reports.

In yet another aspect, the present disclosure provides in some embodiments a report processing method for a second network node, including: obtaining RLF reports and successful handover reports; and transmitting an RLF report and a successful handover report that have an association relationship to a first network node, to enable the first network node to analyze a cause for an RLF or a cause for a handover failure in accordance with the RLF report and the successful handover report that have the association relationship.

Optionally, the obtaining the successful handover reports specifically includes receiving the successful handover reports transmitted by a UE, and the successful handover reports are generated after the UE has successfully performed DAPS handover. The obtaining the RLF reports specifically includes receiving the RLF reports transmitted by another network node, the RLF reports are generated after the UE is subjected to an RLF, the UE is subjected to the RLF after the UE has successfully performed the DAPS handover, and the other network node is a network node to which the UE is reconnected after the UE is subjected to the RLF after the UE has successfully performed the DAPS handover.

Optionally, the transmitting the RLF report and the successful handover report that have the association relationship to the first network node specifically includes: identifying the RLF report and the successful handover report that have the association relationship, the RLF report and the successful handover report that have the association relationship being generated by a same UE; and transmitting the identified RLF report and successful handover report that have the association relationship to the first network node.

In still yet another aspect, the present disclosure provides in some embodiments a UE, including a memory, a transceiver and a processor. The memory is configured to store therein a computer program, and the transceiver is configured to receive and transmit data under the control of the processor. The processor is configured to read the computer program in the memory to: generating an RLF report and a successful handover report, the RLF report carrying a UE ID, the successful handover report carrying the UE ID, the successful handover report being generated after the UE has successfully performed DAPS handover, the RLF report being generated after the UE is subjected to an RLF, wherein the UE is subjected to the RLF after the UE has successfully performed the DAPS handover; and transmit the generated RLF report and successful handover report to a network device.

In still yet another aspect, the present disclosure provides in some embodiments a network node, the network node being a first network and including a memory, a transceiver and a processor. The memory is configured to store therein a computer program, and the transceiver is configured to receive and transmit data under the control of the processor. The processor is configured to read the computer program in the memory to: obtain RLF reports and successful handover reports; determine an RLF report and a successful handover report that have an association relationship; and analyze a cause for an RLF or a cause for a handover failure in accordance with the determined RLF report and successful handover report that have the association relationship.

Optionally, when obtaining the RLF reports and the successful handover reports, the processor is further configured to receive RLF reports and successful handover reports transmitted by a second network node through first interface messages, the second network node is a node after a UE has performed DAPS handover, the first network node is a node before the UE performs the DAPS handover, the RLF report is obtained by the second network node from another network node, and the other network node is a network node to which the UE is reconnected after the UE is subjected to the RLF, wherein the UE is subjected to the RLF after the UE has successfully performed the DAPS handover. The determining the RLF report and the successful handover report that have the association relationship includes determining an RLF report and a successful handover report transmitted in one of the first interface messages as the RLF report and the successful handover report that have the association relationship.

Optionally, when determining the RLF report and the successful handover report transmitted in one of the first interface messages as the RLF report and the successful handover report that have the association relationship, the processor is further configured to, when RLF reports and successful handover reports generated by different UEs are carried in one of the first interface messages, determine an RLF report and a successful handover report generated by a same UE as the RLF report and the successful handover report that have the association relationship.

Optionally, when obtaining the RLF reports and the successful handover reports, the processor is further configured to obtain the RLF reports through a second interface message and obtain the successful handover reports through a third interface message. The determining the RLF report and the successful handover report that have the association relationship includes: determining an RLF report corresponding to a first UE ID in accordance with the first UE ID carried in the second interface message, and determining a successful handover report corresponding to a second UE ID in accordance with the second UE ID carried in the third interface message; and when the first UE ID is the same as the second UE ID, determining the RLF report corresponding to the first UE ID and the successful handover report corresponding to the second UE ID as the RLF report and the successful handover report that have the association relationship.

Optionally, the first interface message, the second interface message and the third interface message are each at least one of a failure indication message, a handover report message, an access and mobility indication message, or a specific message.

Optionally, when obtaining the RLF reports and the successful handover reports, the processor is specifically configured to obtain the RLF reports and the successful handover reports transmitted by a UE, the RLF reports carry UE IDs, and the successful handover reports carry UE IDs. The determining the RLF report and the successful handover report that have the association relationship specifically includes determining an RLF report and a successful handover report carrying a same UE ID as the RLF report and the successful handover report that have the association relationship in accordance with the UE IDs carried in the RLF reports and the UE IDs carried in the successful handover reports.

In still yet another aspect, the present disclosure provides in some embodiments a network node, the network node being a second network node and including a memory, a transceiver and a processor. The memory is configured to store therein a computer program, and the transceiver is configured to receive and transmit data under the control of the processor. The processor is configured to read the computer program in the memory to: obtain RLF reports and successful handover reports; and transmit an RLF report and a successful handover report that have an association relationship to a first network node, to enable the first network node to analyze a cause for an RLF or a cause for a handover failure in accordance with the RLF report and the successful handover report that have the association relationship.

Optionally, when obtaining the successful handover reports, the processor is specifically configured to receive the successful handover reports transmitted by a UE, and the successful handover reports are generated after the UE has successfully performed DAPS handover. When obtaining the RLF reports, the processor is specifically configured to receive the RLF reports transmitted by another network node, the RLF reports are generated after the UE is subjected to an RLF, the UE is subjected to the RLF after the UE has successfully performed the DAPS handover, and the other network node is a network node to which the UE is reconnected after the UE is subjected to the RLF after the UE has successfully performed the DAPS handover.

Optionally, when transmitting the RLF report and the successful handover report that have the association relationship to the first network node, the processor is specifically configured to: identify the RLF report and the successful handover report that have the association relationship, the RLF report and the successful handover report that have the association relationship being generated by a same UE; and transmit the identified RLF report and successful handover report that have the association relationship to the first network node.

In still yet another aspect, the present disclosure provides in some embodiments a report processing device for a UE, including: a report generation module configured to generate an RLF report and a successful handover report, the RLF report carrying a UE ID, the successful handover report carrying a UE ID, the successful handover report being generated after the UE has successfully performed DAPS handover, the RLF report being generated after the UE is subjected to an RLF, wherein the UE is subjected to the RLF after the UE has successfully performed the DAPS handover; and a second transmission module configured to transmit the generated RLF report and successful handover report to a network device.

In still yet another aspect, the present disclosure provides in some embodiments a report processing device for a first network node, including: a first report obtaining module configured to obtain RLF reports and successful handover reports; a determination module configured to determine an RLF report and a successful handover report that have an association relationship; and an analysis module configured to analyze a cause for an RLF or a cause for a handover failure in accordance with the determined RLF report and successful handover report that have the association relationship.

Optionally, when obtaining the RLF reports and the successful handover reports, the first report obtaining module is further configured to receive RLF reports and successful handover reports transmitted by a second network node through first interface messages, the second network node is a node after a UE has performed DAPS handover, the first network node is a node before the UE performs the DAPS handover, the RLF report is obtained by the second network node from another network node, and the other network node is a network node to which the UE is reconnected after the UE is subjected to the RLF, wherein the UE is subjected to the RLF after the UE has successfully performed the DAPS handover. When determining the RLF report and the successful handover report that have the association relationship, the determination module is further configured to determine an RLF report and a successful handover report transmitted in one of the first interface messages as the RLF report and the successful handover report that have the association relationship.

Optionally, when determining the RLF report and the successful handover report transmitted in one of the first interface messages as the RLF report and the successful handover report that have the association relationship, the determination module is further configured to, when RLF reports and successful handover reports generated by different UEs are carried in one of the first interface messages, determine an RLF report and a successful handover report generated by a same UE as the RLF report and the successful handover report that have the association relationship.

Optionally, when obtaining the RLF reports and the successful handover reports, the first report obtaining module is further configured to obtain the RLF reports through a second interface message and obtaining the successful handover reports through a third interface message. When determining the RLF report and the successful handover report that have the association relationship, the determination module is further configured to: determine an RLF report corresponding to a first UE ID in accordance with the first UE ID carried in the second interface message, and determine a successful handover report corresponding to a second UE ID in accordance with the second UE ID carried in the third interface message; and when the first UE ID is the same as the second UE ID, determine the RLF report corresponding to the first UE ID and the successful handover report corresponding to the second UE ID as the RLF report and the successful handover report that have the association relationship.

Optionally, the first interface message, the second interface message and the third interface message are each at least one of a failure indication message, a handover report message, an access and mobility indication message, or a specific message.

Optionally, when obtaining the RLF reports and the successful handover reports, the first report obtaining module is specifically configured to obtain the RLF reports and the successful handover reports transmitted by a UE, the RLF reports carry UE IDs, and the successful handover reports carry UE IDs. When determining the RLF report and the successful handover report that have the association relationship, the determination module is specifically configured to determine an RLF report and a successful handover report carrying a same UE ID as the RLF report and the successful handover report that have the association relationship in accordance with the UE IDs carried in the RLF reports and the UE IDs carried in the successful handover reports.

In still yet another aspect, the present disclosure provides in some embodiments a report processing device for a second network node, including: a second report obtaining module configured to obtain RLF reports and successful handover reports; and a first transmission module configured to transmit an RLF report and a successful handover report that have an association relationship to a first network node, to enable the first network node to analyze a cause for an RLF or a cause for a handover failure in accordance with the RLF report and the successful handover report that have the association relationship.

Optionally, when obtaining the successful handover reports, the second report obtaining module is specifically configured to receive the successful handover reports transmitted by a UE, and the successful handover reports are generated after the UE has successfully performed DAPS handover. When obtaining the RLF reports, the second report obtaining module is specifically configured to receive the RLF reports transmitted by another network node, the RLF reports are generated after the UE is subjected to an RLF, the UE is subjected to the RLF after the UE has successfully performed the DAPS handover, and the other network node is a network node to which the UE is reconnected after the UE is subjected to the RLF after the UE has successfully performed the DAPS handover.

Optionally, when transmitting the RLF report and the successful handover report that have the association relationship to the first network node, the first transmission module is specifically configured to: identify the RLF report and the successful handover report that have the association relationship, the RLF report and the successful handover report that have the association relationship being generated by a same UE; and transmit the identified RLF report and successful handover report that have the association relationship to the first network node.

In still yet another aspect, the present disclosure provides in some embodiments a processor-readable storage medium storing therein a computer program. The computer program is executed by a processor so as to implement the above-mentioned report processing method.

In still yet another aspect, the present disclosure provides in some embodiments a computer-readable storage medium storing therein a computer program. The computer program is used to be executed by a computer to implement the above-mentioned report processing method.

In still yet another aspect, the present disclosure provides in some embodiments a communication device storing therein a computer program. The computer program is used to be executed by the communication device to implement the above-mentioned report processing method.

The present disclosure has the following beneficial effect.

According to the report processing method in the embodiments of the present disclosure, when the RLF reports and the successful handover reports are transmitted between the network nodes, the transmitted RLF report and the transmitted successful handover report belonging to a same UE are enabled to be associated with each other. As a result, it is able for the network node to accurately analyze the cause for the handover failure and accurately analyze a failure type, thereby to effectively optimize a handover parameter.

### BRIEF DESCRIPTION OF THE DRAWINGS

In order to illustrate the technical solutions of the present disclosure or the related art in a clearer manner, the drawings desired for the present disclosure will be described hereinafter briefly. Obviously, the following drawings merely relate to some embodiments of the present disclosure, and based on these drawings, a person skilled in the art may obtain the other drawings without any creative effort.
Fig. 1 is a schematic view showing a handover procedure applicable to a report processing method according to an embodiment of the present disclosure;
Fig. 2 is a schematic view showing another handover procedure applicable to the report processing method according to an embodiment of the present disclosure;
Fig. 3 is a schematic view showing a transmission procedure of a handover report message;
Fig. 4 is a flow chart of the report processing method according to an embodiment of the present disclosure;
Fig. 5 is a schematic view showing the implementation of the report processing method according to an embodiment of the present disclosure;
Fig. 6 is another schematic view showing the implementation of the report processing method according to an embodiment of the present disclosure;
Fig. 7 is another flow chart of the report processing method according to an embodiment of the present disclosure;
Fig. 8 is yet another flow chart of the report processing method according to an embodiment of the present disclosure;
Fig. 9 is a schematic view showing a network node according to an embodiment of the present disclosure;
Fig. 10 is another schematic view showing the network node according to an embodiment of the present disclosure;
Fig. 11 is a schematic view showing a UE according to an embodiment of the present disclosure;
Fig. 12 is a schematic view showing a report processing device according to an embodiment of the present disclosure;
Fig. 13 is another schematic view showing the report processing device according to an embodiment of the present disclosure; and
Fig. 14 is yet another schematic view showing the report processing device according to an embodiment of the present disclosure.

### DETAILED DESCRIPTION

The present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

Such words as "first" and "second" involved in the specification and the appended claims are merely used to differentiate different objects rather than to represent any specific order. It should be appreciated that, the data used in this way may be replaced with each other, so as to implement the embodiments in an order other than that shown in the drawings or described in the specification. In addition, such terms as "include" or "including" or any other variations involved in the present disclosure intend to provide non-exclusive coverage, so that a procedure, method, system, product or device including a series of steps or units may also include any other elements not listed herein, or may include any inherent steps or units of the procedure, method, system, product or device.

The expression "and/or" in the embodiments of the present disclosure may be merely used to describe the relationship between objects, and it may include three relationships. For example, "A and/or B" may represent that, there is only A, there are both A and B, and there is only B. Further, the symbol "/" usually refers to "or". The expression "a plurality of" refers to two or more, and the other quantifiers are similar.

Such expressions as "illustrative" and "for example" are merely used to show examples or explanations. Any illustrative embodiment or scheme in the present disclosure shall not be construed as being superior over the other embodiment or scheme. Definitely, these words intend to exhibit relevant concepts in a concrete manner.

A report processing method, a report processing device, a network node and a UE in the embodiments of the present disclosure are used in a wireless communication system. The wireless communication system is a system using a 5^{th}-Generation (5G) mobile communication technology, and it includes, but not limited to, a 5G New Radio (NR) system, which may be understood by the person skilled in the art.

In order to clearly describe the technical solutions of the report processing method in the embodiments of the present disclosure, handover procedures for the report processing method will be described hereinafter.

The report processing method in the embodiments of the present disclosure may be applied to a conventional handover procedure and a DAPS handover procedure.

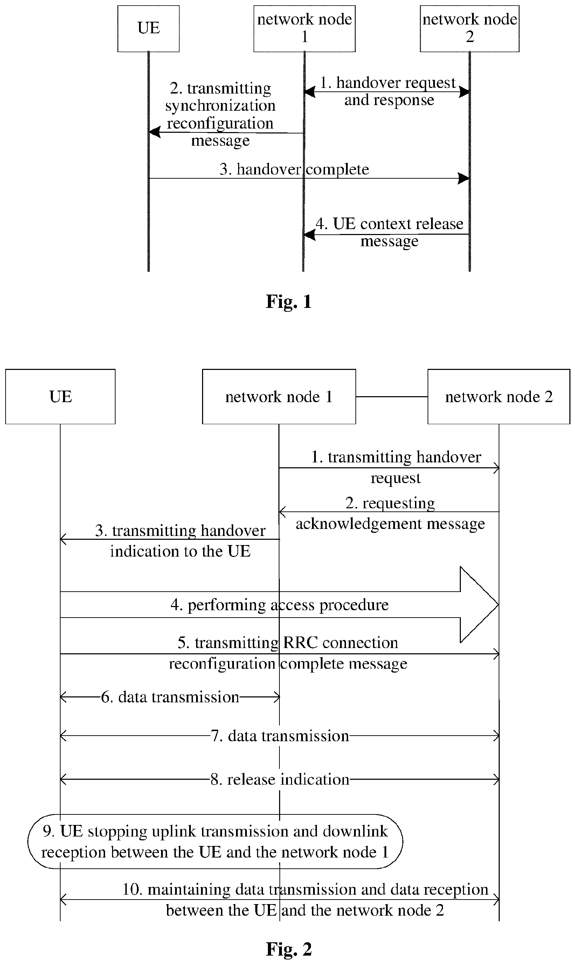

As shown in Fig. 1, the conventional handover procedure includes the following steps.

Step 1: a handover request and a handover response are transmitted between a network node 1 and a network node 2, so that a UE hands over from the network node 1 (a source network node) to the network node 2 (a target network node).

Step 2: the network node 1 transmits a synchronization reconfiguration message to the UE, and the UE performs handover immediately so as to be disconnected from the network node 1 and perform random access to the network node 2.

Step 3: the UE completes the random access to the network node 2, and transmits a handover complete message to the network node 2.

Step 4: the network node 2 transmits a context release message to the network node 1, so as to notify the network node 1 to release a UE context.

As shown in Fig. 2, the DAPS handover procedure includes the following steps.

Step 1: in the process of maintaining a data transmission link between a source network node and a UE, the source network node transmits a handover request to a target network node.

Step 2: the target network node transmits a request acknowledgement message to the source network node.

Step 3: the source network node transmits handover indication to the UE.

Step 4: the UE performs an access procedure to the target network node.

Step 5: after the UE has completed Radio Resource Control (RRC) reconfiguration, the UE transmits an RRC connection reconfiguration complete message to the target network node.

Through Steps 1 to 5, the original data transmission link is always maintained between the source network node and the UE. After the target network node has firstly received the handover indication from the source network node and then received the RRC connection reconfiguration complete message from the UE, when there is a to-be-transmitted Packet Data Convergence Protocol (PDCP) data packet (data subjected to new security context encryption or integrity protection processing) or a control frame in a buffer area, it is transmitted to the UE through a configured link with respect to the UE.

Steps 6 and 7: the UE transmits data to, and receives data from, the source network node and the target network node simultaneously

Step 8: the target network entity transmits release indication to the UE, so as to notify the UE to complete the data transmission, and expects the UE to release data connection between the source network node and the UE.

Step 9: the UE stops uplink data transmission and downlink data reception between the source network node and the UE, and starts to release a Master Cell Group (MCG) configuration at an entire source side.

Step 10: the UE merely maintains to transmit data to, and receive data from, the target network node.

For the handover procedures in Figs. 1 and 2 using the report processing method in the embodiments of the present disclosure, the UE is a terminal side device, e.g., a mobile phone, a tablet personal computer, a laptop computer, a Personal Digital Assistant (PDA), a Mobile Internet Device (MID) or a wearable device. It should be appreciated that, in the embodiments of the present disclosure, a specific type of the UE 11 will not be further particularly defined herein.

The network node (the source network node or the target network node) may be a base station, e.g., a 5G base station or a future base station (e.g., gNB, 5G NR NB, or ng-eNB, or a base station in the other communication system), or NodeB. It should be appreciated that, the 5G base station is taken as an example in the embodiments of the present disclosure, but a specific type of the network node will not be further particularly defined herein.

In addition, in the above-mentioned handover procedures in Figs. 1 and 2, RLF reports and successful handover reports are recorded at a UE side.

In the case of a handover failure of an RLF, the UE records the RLF report. The RLF reports are used for at least two scenarios, i.e., the handover failure and the RLF, and one RLF report is merely used for one scenario.

Optionally, the RLF report includes at least one of: a measurement result of a previous serving cell for the UE; a measurement result of a neighboring cell after the UE has confirmed the handover failure or RLF; position information about the UE; identification information about a cell in which the failure occurs, e.g., a Cell Global Identity (CGI)/Physical Cell Identity (PCI) frequency point; identification information about a reestablished cell; a UE report timer, i.e., a duration from a time point when the UE previously received a handover initiation message to a time point when a connection failure occurs; a cause for the connection failure, e.g., the handover failure or the RLF; a Cell Radio Network Temporary Identifier (C-RNTI) used when the connection failure occurs for the UE; a sub-cause for the RLF, e.g., T310 timeout, or a random access issue, or that the maximum retransmission occurs at an RLC layer, or a Beam Failure Recovery Failure (BFRF); a duration from a time point when the connection failure is confirmed by the UE to a time point when the UE reports the RLF report; a Tracking Area Code (TAC) of a cell where the connection failure occurs; a Blue Tooth (BT)-related recording result; or a Wireless Local Area Network (WLAN).

In a possible embodiment of the present disclosure, scenarios where the successful handover report is recorded includes the followings. In the conventional handover procedure, the UE records the successful handover report in the case that a length of a T310 timer, a T312 timer or a T304 timer exceeds a predetermined threshold. In the DAPS handover procedure, the UE records the successful handover report in the case that the length of the T310 timer, the T312 timer or the T304 timer exceeds the predetermined threshold or an RLF occurs for a link at a source side. Contents in the successful handover report include measurement information, cell identification information, UE position information and a value of the timer at a triggering time point.

After the UE has recorded the RLF report and/or the successful handover report, the UE transmits the RLF report and/or the successful handover report to the network node through an RRC connection establishment complete message, an RRC connection reconfiguration complete message, an RRC connection reestablishment complete message or an RRC recovery complete message. Alternatively, the network node transmits a request message to the UE, and the UE transmits the RLF report and/or the successful handover report to the network node through a response message.

In addition, in order to prevent the occurrence of the failures in a UE mobility procedure, Mobility Robustness Optimization (MRO) is used to help the network optimization.

In the case of the handover failure or RLF, the UE records the RLF report. After the handover failure, the UE performs cell selection, and accesses the network again through RRC connection reestablishment or RRC connection establishment, and notifies the network that the RLF report is reserved at the UE side. If necessary, the network side obtains the RLF report for the network optimization at the network side.

The MRO characteristic is mainly used to find and solve parameter configuration problems in the mobility process, and three types of failures have been defined, i.e., too-early handover, too-late handover, and handover to wrong cell.

Too-late handover: the RLF occurs after the UE has stably resided in a source cell for a certain time period, and the UE tries to access a different cell through RRC connection reestablishment.

Too-early handover: the UE fails to access a target cell in a handover process or the UE has accessed the target cell successfully but the RLF occurs very soon, and the UE tries to access the source cell through RRC connection reestablishment.

Handover to wrong cell: the UE fails to access the target cell in the handover process or the UE has accessed the target cell successfully but the RLF occurs very soon, and the UE tries to access a cell other than the target cell and the source cell through RRC connection reestablishment.

A key for determining the type of the failure lies in whether the UE stably resides in the target cell after the handover has been completed. When the UE stably resides in the target cell, the failure is irrelevant to the previous handover, and when the UE fails to stably resides in the target cell, the failure may be caused by the previous handover, e.g., an inappropriate target cell is selected.

Whether the UE stably resides in the target cell is determined in accordance with the UE report timer in the RLF report. When a value of the report timer is small, it means that the UE fails to stably reside in the target cell; when the value is large, it means that the UE stably resides in the target cell after the handover; and when the value is 0, it means that there is no handover process.

For the DAPS handover, the connection to the source cell is maintained in the handover procedure, so the scenarios where the failures occur may be more complex. The scenarios involved in the DAPS handover, i.e., too-late handover, too-early handover, and handover to wrong cell, will be described as follows.

### Too-late DAPS handover

The RLF occurs after the UE has stably resided in a source cell for a certain time period, and the UE tries to access a different cell through RRC connection reestablishment.

After the UE has stably resided in the source cell for a certain time period, the DAPS handover is performed successfully and the UE stably resides in a target cell, but the RLF occurs in the source cell in the DAPS handover procedure.

### Too-early DAPS handover

The UE has accessed the target cell successfully in the DAPS handover procedure but the RLF occurs very soon, and the UE tries to access the source cell through RRC connection reestablishment.

In the DAPS handover procedure, the UE fails to access the target cell and successfully falls back to the source cell, and no RLF occurs within a certain time period.

### DAPS handover to wrong cell

In the DAPS handover procedure, the RLF occurs in the source cell at first, and then the UE fails to access the target cell. The UE tries to access the other cell different from the to-be-handed-over target cell and the source cell through the RRC connection reestablishment.

In the DAPS handover procedure, the UE successfully accesses the target cell but the RLF occurs very soon. The UE tries to access another cell different from the to-be-handed-over target cell and the source cell through the RRC connection reestablishment.

In the DAPS handover procedure, when the RLF occurs in the source cell, it is recorded in the successful handover report. When the connection failure occurs at the target cell side subsequently or the UE successfully performs the random access at the target cell side but the RLF occurs very soon, it is recorded in the RLF report.

Based on the above-mentioned MRO characteristics, a message procedure between the network nodes includes a failure indication message, a handover report message, and an access and mobility indication message.

### Failure indication message

After the handover failure or RLF, the UE may access the network again. After the network node has obtained the RLF report from the UE, when the current network node is not a node whether the failure occurs, relevant information, e.g., the RLF report, needs to be forwarded to a network node where the failure occurs for analysis and optimization.

Optionally, the failure indication message is triggered by an RRC reestablishment request from an air interface or triggered by the RRC establishment. When the failure indication message is triggered by the RRC reestablishment request, it includes information carried in the RRC reestablishment request and a UE RLF report, and when the failure indication message is triggered by the RRC establishment, it includes the UE RLF report.

### Handover report message

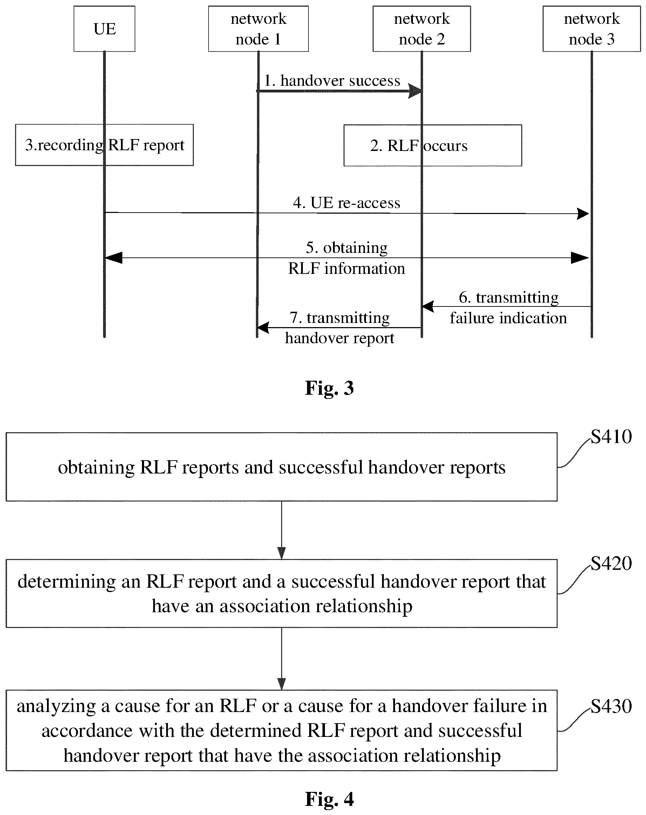

After the network node where the failure occurs has analyzed the failure indication message, it probably needs to transmit the handover report message. Optionally, as shown in Fig. 3, a transmission procedure includes the following steps.
Step 1: the UE successfully hands over from the network node 1 to the network node 2.
Step 2: the RLF occurs at the network node 2.
Step 3: the UE records the RLF report.
Step 4: the UE successfully accesses a network node 3.
Step 5: the network node 3 obtains the RLF report from the UE.
Step 6: after the UE successfully hands over to the network node 3, the RLF occurs, a base station where the failure occurs is the network node 2, and the UE transmits the failure indication message to the network node 2.
Step 7: after the network node 2 has analyzed the failure indication message, it finds that the RLF is caused by an inappropriate target cell selected by the network node 1 and a type of the handover failure is handover to wrong cell, i.e., the UE should select the network node 3. At this time, the UE transmits the handover report message to the network node 1.

Optionally, the handover report message includes: a report type indicating an analysis result of the node where the failure occurs, including too-early handover, or handover to wrong cell; a handed-over-to source cell, including a GCI; a to-be-handed-over target cell, including the GCI; a cell where the RRC reestablishment is performed, including the GCI (when the report type is handover to wrong cell, it includes indication information about the cell where RRC reestablishment is performed, so as to notify the source cell to select the cell as the to-be-handed-over target cell); and optionally the UE RLF report (when the received failure indication message includes the UE RLF report, the handover report message also includes the UE RLF report).

The access and mobility indication message is used to transmit relevant information, e.g., the successful handover report, between the network nodes.

Based on the above, in the DAPS handover procedure, at the source side, the RLF may occur; and at the target side, the random access failure may also occur or the RLF may occur very soon after the random access has been performed successfully. The failure information at the source side is recorded in the successful handover report and transmitted between the network nodes through the access and mobility indication message. The failure information at the target side is recorded in the RLF report and transmitted between the network nodes through the failure indication message. After the handover has been completed, the network node at the source side has probably released the UE context information, so when he successful handover report and the RLF report are received through the access and mobility indication message and the failure indication message, it is impossible to know whether the reports correspond to a same UE. When the successful handover report corresponds to UE1 and the RLF report corresponds to UE2, a DAPS too-late handover error may be determined by the UE1 and a too-early handover error may be determined by the UE2. When the successful handover report and the RLF report belong to a same UE, an error where a handover to a wrong cell is determined by the UE may occur.

Based on the above analysis, when analyzing the DAPS handover error at the source side, it is necessary to determine whether the successful handover report and the RLF report belong to a same UE. Otherwise, the successful handover report and the RLF report are analyzed separately, and thereby an inaccurate analysis result may occur.

In order to solve the above-mentioned problem, the present disclosure provides in some embodiments of the present disclosure a report processing method. According to the report processing method, when the RLF reports and the successful handover reports are transmitted between the network nodes, the transmitted RLF report and the transmitted successful handover report belonging to a same UE are enabled to be associated with each other. As a result, it is able for the network node to accurately analyze a cause for the handover failure and accurately analyze a failure type, thereby to effectively optimize a handover parameter.

As shown in Fig. 4, the present disclosure provides in some embodiments a report processing method for a first network node, which includes: S410 of obtaining RLF reports and successful handover reports; S420 of determining an RLF report and a successful handover report that have an association relationship; and S430 of analyzing a cause for an RLF or a cause for a handover failure in accordance with the determined RLF report and successful handover report that have the association relationship.

In the embodiments of the present disclosure, optionally, the second network node is, but not limited to, a target network node for a target UE after handover, and the first network node is, but not limited, a source network node for the target UE before the handover.

According to the report processing method in the embodiments of the present disclosure, when the second network node transmits the RLF report and the successful handover report to the first network node, the RLF report and the successful handover report are associated with a UE, i.e., the second network node indicates that the RLF report and the successful handover report are associated with a same UE, to enable the first network node to analyze a failure type in accordance with the RLF report and the successful handover report associated with each other. As a result, it is able for the network node to accurately analyze the failure type, prevent the occurrence of an analysis error, and effectively optimize a handover parameter.

In an implementation, S410 of obtaining the RLF reports and the successful handover reports includes receiving RLF reports and successful handover reports transmitted by a second network node through first interface messages, the second network node is a node after a UE has performed DAPS handover, the first network node is a node before the UE performs the DAPS handover, the RLF report is obtained by the second network node from another network node, and the other network node is a network node to which the UE is reconnected after the UE is subjected to the RLF, wherein the UE is subjected to the RLF after the UE has successfully performed the DAPS handover. S420 of determining the RLF report and the successful handover report that have the association relationship includes determining an RLF report and a successful handover report transmitted in one of the first interface messages as the RLF report and the successful handover report that have the association relationship.

Optionally, the determining the RLF report and the successful handover report transmitted in one of the first interface messages as the RLF report and the successful handover report that have the association relationship includes, when RLF reports and successful handover reports generated by different UEs are carried in one of the first interface messages, determining an RLF report and a successful handover report generated by a same UE as the RLF report and the successful handover report that have the association relationship.

Based on the above, the second network node transmits the RLF report and the successful handover report to the first network node through a same interface message (i.e., the first interface message), and the RLF report and the successful handover report transmitted simultaneously are associated with the target UE.

In an implementation, optionally, the RLF report and the successful handover report associated with the target UE are received from the second network node through at least one of an XN interface, an X2 interface, an NG interface or an S 1 interface.

Optionally, the RLF report and the successful handover report associated with the target UE are received from the second network node through at least one of a failure indication message, a handover report message, an access and mobility indication message, or a specific message.

The specific message is a predetermined message designated for indicating the transmission of the RLF report and the successful handover report.

Optionally, in the case that the RLF reports and the successful handover reports are received from the second network node through the first interface message, the first interface message includes a report list, the report list includes the RLF reports and the successful handover reports generated by different UEs, and the target UE is one of these UEs.

To be specific, the report list includes at least one column, and the RLF report and the successful handover report corresponding to a same UE is recorded in each column, i.e., the RLF report and the successful handover report for the target UE is recorded in one column of the report list.

In addition, the successful handover report and the RLF report are not real-time reports, so the successful handover reports and the RLF reports generated by a plurality of UEs are buffered in the second network node, and then the successful handover report and the RLF report associated with a same UE are transmitted simultaneously through one interface message. When the first interface message includes the reports generated by the plurality of UEs, the reports generated by the plurality of UEs are transmitted in the form of a report list, each node in the list represents the reports generated by one UE, and the reports generated by each UE include the successful handover report and the RLF report associated with each other.

In another implementation in the embodiments of the present disclosure, S410 of obtaining the RLF reports and the successful handover reports includes obtaining the RLF reports through a second interface message and obtaining the successful handover reports through a third interface message. S420 of determining the RLF report and the successful handover report that have the association relationship includes: determining an RLF report corresponding to a first UE ID in accordance with the first UE ID carried in the second interface message, and determining a successful handover report corresponding to a second UE ID in accordance with the second UE ID carried in the third interface message; and when the first UE ID is the same as the second UE ID, determining the RLF report corresponding to the first UE ID and the successful handover report corresponding to the second UE ID as the RLF report and the successful handover report that have the association relationship.

In the embodiments of the present disclosure, the second network node transmits the RLF report and the successful handover report to the first network node through different interface messages respectively, and the interface messages for transmitting the RLF report and the successful handover report include UE IDs. In this way, through the UE IDs in the interface messages, the RLF report and the successful handover report generated by a same UE and transmitted through different interface messages are associated with each other.

Optionally, in the case that the RLF report is obtained through the second interface message, the second interface message includes a first report list, and the first report list includes the RLF reports from at least one UE. In the case that the successful handover report is obtained through the third interface message, the third interface message includes a second report list, and the second report list includes the successful handover reports from at least one UE.

In the implementation, the interface message includes the report list for transmitting the successful handover reports or the RLF reports from at least one UE. In the interface message, a corresponding UE ID is provided for each successful handover report or RLF report, so as to indicate a respective UE associated with each successful handover report or each RLF report.

In addition, optionally in this implementation, when the RLF report is obtained through the second interface message or the successful handover report is obtained through the third interface message, each of the second interface message and the third interface message is at least one of a failure indication message, a handover report message, an access and mobility indication message, or a specific message. Optionally, an interface for transmitting each of the second interface message and the third interface message is at least one of an Xn interface, an X2 interface, an NG interface or an S 1 interface.

In yet another possible embodiment of the present disclosure, S410 of obtaining the RLF reports and the successful handover reports specifically includes obtaining the RLF reports and the successful handover reports transmitted by a UE, the RLF reports carry UE IDs, and the successful handover reports carry UE IDs. S420 of determining the RLF report and the successful handover report that have the association relationship specifically includes determining an RLF report and a successful handover report carrying a same UE ID as the RLF report and the successful handover report that have the association relationship in accordance with the UE IDs carried in the RLF reports and the UE IDs carried in the successful handover reports.

In the embodiments of the present disclosure, apart from the successful handover report and the RLF report, the UE further records the UE ID, so it is unnecessary to add the UE ID in the interface message for transmitting the successful handover report or the RLF report.

In this way, upon the receipt of the successful handover reports and the RLF reports, the source network node (the first network node) determines the successful handover report and the RLF report associated with each other in accordance with the UE IDs in the successful handover reports and the RLF reports, and then analyze a type of the handover failure.

The implementation procedure of the report transmission method will be described illustratively hereinafter.

There are many scenarios where the DAPS failure occurs, so the processing of the RLF report or the successful handover report may occur in various scenarios. In order to clearly describe the implementation procedure of the report processing method in the embodiments of the present disclosure, a most typical DAPS failure scenario (i.e., a scenario where the RLF occurs for the source network node in the DAPS handover procedure, the UE successfully perform the random access to the target network node but the RLF occurs very soon, and the UE recovers the connection to the other network node) is taken as an example, so as to describe in details S410 to S430 of obtaining the RLF reports and the successful handover reports and determining the RLF report and the successful handover report that have the association relationship.

It should be appreciated that, the report processing method in the embodiments of the present disclosure is applied to not only the DAPS handover procedure but also the conventional handover procedure, and applied in a failure scenario other than the scenario illustratively described hereinafter.

### First Embodiment

In this embodiment, in a first mode, the RLF report and the successful handover report are received from the second network node through the first interface message, and the RLF report is associated with the successful handover report.

During the implementation, the transmitting, by the second network node, the RLF report and the successful handover report through the first interface message includes: obtaining, by the second network node, the successful handover report transmitted by the target UE after the target UE successfully hands over from the first network node to the second network node; and obtaining, by the second network node, the RLF report transmitted by a third network node to the target UE through the failure indication message after the RLF occurs for the target UE at the second network node and the UE is connected to the third network node.

The transmitting, by the second network node, the RLF report and the successful handover report associated with the target UE to the first network node through the first interface message includes associating the successful handover report with the RLF report, and transmitting the RLF report and the successful handover report of the target UE to the first network node through the first interface message.

In the implementation, after obtaining the successful handover report and the RLF report, the second network node associates the successful handover report with the RLF report, and transmit the RLF report and the successful handover report of the target UE to the first network node through a same interface message.

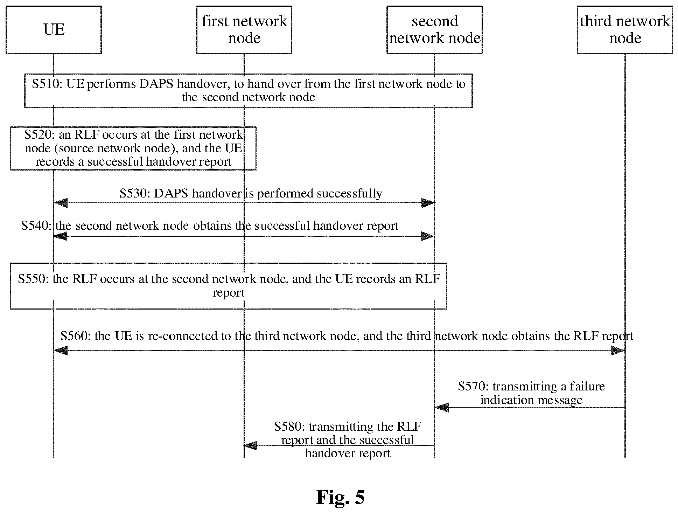

As shown in Fig. 5, the specific implementation procedure thereof includes the following steps.

S510: the UE performs the DAPS handover, to hand over from the first network node (the source network node) to the second network node (the target network node).

S520: the RLF occurs at the first network node (the source network node), and the UE records the successful handover report.

S530: the DAPS handover is performed successfully.

S540: the second network node (the target network node) initiates a UE information obtaining procedure, so as to obtain the successful handover report recorded by the UE. Optionally, an information request is transmitted to the UE, so as to request to obtain the successful handover report.

S550: the RLF occurs at the second network node (the target network node), and the UE records the RLF report.

S560: the UE is re-connected to the other network node (the third network node), and the third network node obtains the RLF report recorded by the UE.

S570: the third network node transmits the RLF report to the second network node (the target network node) through the failure indication message.

S580: the second network node (the target network node) identifies the received RLF report, identifies the RLF report and the successful handover report belonging to a same UE in accordance with the previously-obtained successful handover report, and transmit the RLF report and the successful handover report belonging to the same UE to the first network node (the source network node) through a same interface message (the first interface message), so as to indicate that the RLF report and the successful handover report belong to the same UE.

Optionally, the second network node identifies whether the received RLF report and successful handover report belong to a same UE in accordance with at least one of position information in the RLF report and the successful handover report, a UE ID, or a cell ID.

In addition, optionally, in the case that the RLF report and the successful handover report associated with the target UE are transmitted to the second network node through the first interface message, the first interface message includes a report list, the report list includes the RLF reports and the successful handover reports associated with each of at least one UE, and the target UE is one of the at least one UE.

To be specific, the report list includes at least one report node, the RLF report and the successful handover report corresponding to a same UE are recorded in each report node, and the RLFL report and the successful handover report of the target UE are recorded in one of the report nodes.

In addition, the successful handover report and the RLF report are not real-time reports, so the successful handover reports and the RLF reports generated by a plurality of UEs may be buffered in the base station, and then the successful handover report and the RLF report associated with a same UE are transmitted simultaneously through one interface message. When the interface message includes the reports generated by the plurality of UEs, the reports generated by the plurality of UEs are transmitted in the form of a report list, each node in the list represents the reports generated by one UE, and the reports generated by each UE include the successful handover report and the RLF report associated with each other.

Optionally, when the RLFL report and the successful handover report are transmitted through a same interface message (the first interface message), an interface for transmitting the first interface message is at least one of an XN interface, an X2 interface, an NG interface or an S 1 interface.

Optionally, the interface message is transmitted through an XN interface or an X2 interface. When there is no XN or X2 connection between the network nodes, the first interface message is transmitted through an NG or S 1 interface.

In another implementation, optionally, when the RLF report and the successful handover report are transmitted through a same interface message (the first interface message), the first interface message may be transmitted through at least one of a failure indication message, a handover report message, an access and mobility indication message, or a specific message.

### Second Embodiment

In this embodiment, in a second mode, the first network node obtains the RLF report through a second interface message, and obtains the successful handover report through a third interface message. Each of the second interface message and the third interface message includes an ID of the target UE.

In the implementation, the transmitting, by the second network node, the RLF report to the first network node through the second interface message and the successful handover report to the first network node through the third interface message includes: when the second network node obtains the successful handover report transmitted after the target UE successfully hands over from the first network node to the second network node, transmitting the successful handover report to the first network node through the third interface message; and when the second network node obtains the RLF report transmitted by the third network node to the target UE through the failure indication message after the target UE is reconnected to the third network node, transmitting the RLF report to the first network node through the second interface message.

In the implementation, the successful handover report and the RLF report are transmitted to the first network node through different interface messages. In addition, upon the receipt of the successful handover report, it is immediately transmitted to the source network node, without any necessity to wait for the subsequent RLF report. The interface message for transmitting the successful handover report is associated with the interface message for transmitting the RLF report through the UE IDs in the interface messages.

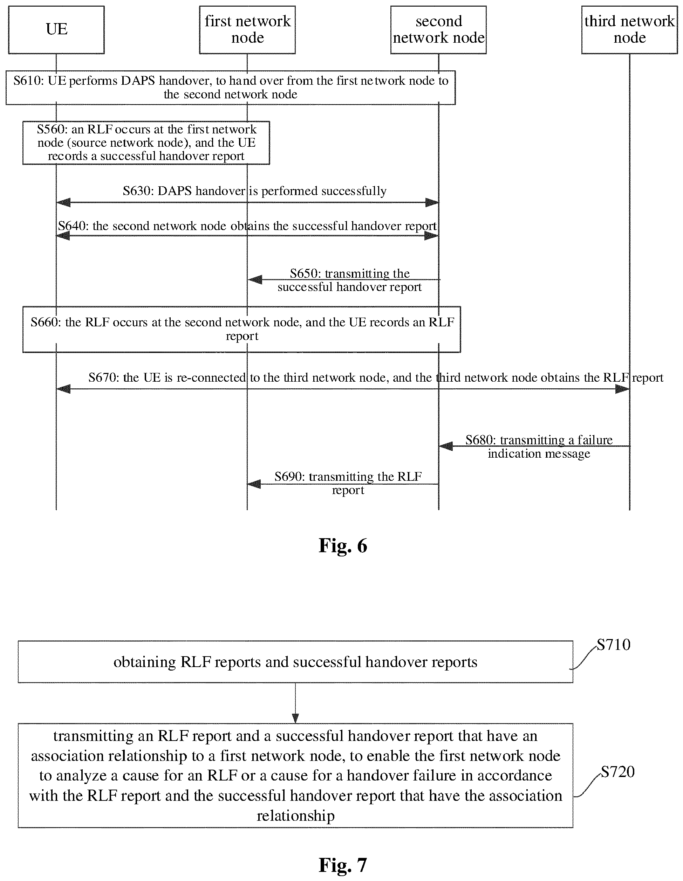

As shown in Fig. 6, the specific implementation procedure thereof includes the following steps.

S610: the UE performs the DAPS handover, to hand over from the first network node (the source network node) to the second network node (the target network node).

S620: the RLF occurs at the first network node (the source network node), and the UE records the successful handover report.

S630: the DAPS handover is performed successfully.

S640: the second network node (the target network node) initiates a UE information obtaining procedure so as to obtain the successful handover report recorded by the UE. Optionally, an information request is transmitted to the UE, so as to request to obtain the successful handover report.

S650: upon the receipt of the successful handover report, the second network node (the target network node) immediately transmits the successful handover report to the first network node (the source network node) through the interface message (the third interface message).

S660: the RLF occurs at the second network node (the target network node), and the UE records the RLF report.

S670: the UE is reconnected to another network node (the third network node), and the third network node obtains the RLF report recorded by the UE.

S680: the third network node transmits the RLF report to the second network node (the target network node) through the failure indication message.

S690: the second network node (the target network node) transmits the RLF report to the first network node (the source network node) through the interface message (e.g., the second interface message).

In the implementation, in S650 and S690, when the second network node transmits the successful handover report and the RLF report to the first network node through the interface messages, the interface messages include the UE ID, so as to indicate that the successful handover report and the RLF report correspond to a same UE.

After the UE hands over from the source network node to the target network node, UE context information has probably been deleted at the source network node, and it is impossible to obtain the UE context information in accordance with the UE ID. However, the second interface message for transmitting the RLF report is associated with the third interface message for transmitting the successful handover report in accordance with the UE ID in the interface messages, so as to determine that the successful handover report and the RLF report correspond to a same UE.

Optionally, in the case that the RLF report is transmitted to the first network node through the second interface message, the second interface message includes a first report list, and the first report list includes the RLF report of at least one UE. In the case that the successful handover report is transmitted to the first network node through the third interface message, the third interface message includes a second report list, and the second report list includes the successful handover report of at least one UE. The target UE is one of the at least one UE.

In the implementation, the interface message includes the report list for transmitting the successful handover report or the RLF report of at least one UE. In addition, in the interface message, a corresponding UE ID is provided for each successful handover report or RLF report, so as to indicate the respective UE associated with each successful handover report or each RLF report.

In the embodiments of the present disclosure, optionally, when the second network node transmits the RLF report to the first network node through the second interface message and transmits the successful handover report to the first network node through the third interface message, each of the second interface message and the third interface message is transmitted through at least one of a failure indication message, a handover report message, an access and mobility indication message, or a specific message.

Optionally, when the second network node transmits the RLF report through the second interface message and transmits the successful handover report through the third interface message, an interface for transmitting each of the second interface message and the third interface message is at least one of an XN interface, an X2 interface, an NG interface or an S1 interface.

Optionally, each of the second interface message and the third interface message is transmitted through an XN interface or an X2 interface. When there is no XN or X2 interface between the network nodes, it may be transmitted through an NG or S1 interface.

In the first and second modes, the target network node needs to identify that the successful handover report and the RLF report belong to a same UE. As compared with the first mode, in the second mode, the target network node may immediately transmit the received successful handover report to the source network node, without any necessity to wait for the subsequent RLF report. Optionally, upon the receipt of the successful handover report, it is unnecessary for the source network node to immediately perform handover analysis and optimization, and instead, it may determine whether there is the RLF report subsequently.

### Third Embodiment

In this embodiment, in a third mode, the second network node transmits the RLF report to the first network node through the second interface message and transmits the successful handover report to the first network node through the third interface message, and each of the RLF report and the successful handover report includes an ID of the target UE.

In this implementation, optionally, a specific handover procedure in this embodiment of the present disclosure is the same as that in the above-mentioned second embodiment. A specific implementation procedure in the third mode will be described hereinafter with reference to Fig. 6.

As shown in Fig. 6, the specific implementation procedure in the third mode includes the following steps.

S610: the UE performs the DAPS handover, so as to hand over from the first network node (the source network node) to the second network node (the target network node).

S620: the RLF occurs at the first network node (the source network node), and the UE records the successful handover report.

S630: the DAPS handover is performed successfully.

S640: the second network node (the target network node) initiates a UE information obtaining procedure so as to obtain the successful handover report recorded by the UE. The successful handover report recorded by the UE includes a UE ID, so the successful handover report obtained by the second network node includes the UE ID. Optionally, an information request is transmitted to the UE, so as to request to obtain the successful handover report.

S650: upon the receipt of the successful handover report, the second network node (the target network node) immediately transmits the successful handover report to the first network node (the source network node) through the interface message (the third interface message).

S660: the RLF occurs at the second network node (the target network node), and the UE records the RLF report. The RLF report recorded by the UE includes the UE ID.

S670: the UE is reconnected to the other network node (the third network node), and the third network node obtains the RLF report recorded by the UE.

S680: the third network node transmits the RLF report to the second network node (the target network node) through the failure indication message.

S690: the second network node (the target network node) transmits the RLF report to the first network node (the source network node) through the interface message (the second interface message).

As compared with the second mode, in the third mode, apart from the successful handover report and the RLF report, the UE further records the UE ID, so it is unnecessary to add the UE ID in the interface message for transmitting the successful handover report or the RLF report.

In the implementation, upon the receipt of the successful handover reports and the RLF reports, the source network node determines the successful handover report and the RLF report associated with each other in accordance with the UE IDs in the successful handover reports and the RLF reports, and then analyzes a type of a handover failure.

Optionally, identical to that in the second embodiment, in the third embodiment, in the case that the second network node transmits the RLF report to the first network node through the second interface message, the second interface message includes a first report list, and the first report list includes the RLF reports of at least one UE. In the case that the second network node transmits the successful handover report to the first network node through the third interface message, the third interface message includes a second report list, and the second report list includes the successful handover reports of the at least one UE. The target UE is one of the at least one UE.

In the implementation, the interface message includes the report list for transmitting the successful handover report or the RLF report of at least one UE. In addition, a corresponding UE ID is provided for each successful handover report or each RLF report, so as to indicate the respective UE associated with each successful handover report or each RLF report.

Optionally, identical to that in the second embodiment, when the RLF report is transmitted to the first network node through the second interface message and the successful handover report is transmitted to the first network node through the third interface message, each of the second interface message and the third interface message is transmitted through at least one of a failure indication message, a handover report message, an access and mobility indication message, or a specific message.

Optionally, when the second network node transmits the RLF report through the second interface message and transmits the successful handover report through the third interface message, an interface for transmitting each of the second interface message and the third interface message is at least one of an XN interface, an X2 interface, an NG interface or an S 1 interface.

Optionally, each of the second interface message and the third interface message is transmitted through an XN interface or an X2 interface. When there is no XN or X2 interface between the network nodes, it is transmitted through an NG or S 1 interface.

According to the report processing method in the embodiments of the present disclosure, when the RLF reports and the successful handover reports are transmitted between the network nodes, the RLF report and the successful handover report belonging to a same UE are associated with each other, so that the network node jointly analyze the successful handover report and the RLF report belonging to the same UE. As a result, it is able to accurately analyze a cause for the handover failure, and accurately analyze the failure type, thereby to effectively optimize a handover parameter.

The present disclosure further provides in some embodiments a report processing method for a second network node. As shown in Fig. 7, the report processing method includes: S710 of obtaining RLF reports and successful handover reports; and S720 of transmitting an RLF report and a successful handover report that have an association relationship to a first network node, to enable the first network node to analyze a cause for an RLF or a cause for a handover failure in accordance with the RLF report and the successful handover report that have the association relationship.

According to the report processing method in the embodiments of the present disclosure, when the RLF reports and the successful handover reports are transmitted between the network nodes, the transmitted RLF report and the transmitted successful handover report belonging to a same UE are enabled to be associated with each other. As a result, it is able for the network node to accurately analyze a cause for the handover failure, and accurately analyze the failure type, thereby to effectively optimize a handover parameter.

In the embodiments of the present disclosure, optionally, the second network node is a node after a UE has performed DAPS handover, the first network node is a node before the UE performs the DAPS handover, the RLF report is obtained by the second network node from another network node, and the other network node is a network node to which the UE is reconnected after the UE is subjected to the RLF, wherein the UE is subjected to the RLF after the UE has successfully performed the DAPS handover.

In the embodiments of the present disclosure, optionally, in S710, the obtaining the successful handover reports specifically includes receiving the successful handover reports transmitted by a UE, and the successful handover reports are generated after the UE has successfully performed DAPS handover. The obtaining the RLF reports specifically includes receiving the RLF reports transmitted by another network node, the RLF reports are generated after the UE is subjected to an RLF, the UE is subjected to the RLF after the UE has successfully performed the DAPS handover, and the other network node is a network node to which the UE is reconnected after the UE is subjected to the RLF after the UE has successfully performed the DAPS handover.

In the embodiments of the present disclosure, optionally, in S720, the transmitting the RLF report and the successful handover report that have the association relationship to the first network node specifically includes: identifying the RLF report and the successful handover report that have the association relationship, the RLF report and the successful handover report that have the association relationship being generated by a same UE; and transmitting the identified RLF report and successful handover report that have the association relationship to the first network node.

In the embodiments of the present disclosure, optionally, in S720, the RLF report and the successful handover report associated with each other are transmitted to the first network node in one of the following modes. In a first mode, the RLF report and the successful handover report associated with the UE are transmitted to the first network node through a first interface message. In a second mode, the RLF report is transmitted to the first network node through a second interface message, the successful handover report is transmitted to the first network node through a third interface message, and each of the second interface message and the third interface message includes an ID of the UE. In a third mode, the RLF report is transmitted to the first network node through the second interface message, the successful handover report is transmitted to the first network node through the third interface message, and each of the RLF report and the successful handover report includes the ID of the UE.

In the first mode, the second network node transmits the RLF report and the successful handover report simultaneously to the first network node through a same interface message (the first interface message), and the RLF report and the successful handover report transmitted simultaneously are associated with the UE.

In the second mode, the second network node transmits the RLF report and the successful handover report to the first network node through different interface messages, and the interface messages for transmitting the RLF report and the successful handover report include the ID of the target UE. In this way, through the ID of the target UE in the interface messages, the RLF report and the successful handover report corresponding to the same target UE in the interface messages are associated with each other.

In the third mode, the second network node transmits the RLF reports and the successful handover reports to the first network node through different interface messages, and the RLF reports and the successful handover reports include UE IDs. In this way, through the UE IDs, it is able to identify the RLF report and the successful handover report corresponding to a same UE.

In the embodiments of the present disclosure, optionally, when the UE generates the RLF report and the successful handover report, the ID of the UE is written into the RLF report and the successful handover report. In other words, as compared with the related art, a content transmitted through an air interface is modified, and the RLF report or the successful handover report including the UE ID is transmitted to the network node.

In the embodiments of the present disclosure, optionally, the RLF report and the successful handover report associated with the target UE are transmitted to the first network node through at least one of an XN interface, an X2 interface, an NG interface, or an S 1 interface.

In the embodiments of the present disclosure, optionally, the RLF report and the successful handover report associated with the target UE are transmitted to the first network node through at least one of a failure indication message, a handover report message, an access and mobility indication message, or a specific message.

The specific message is a predetermined message designated for indicating the transmission of the RLF report and the successful handover report.

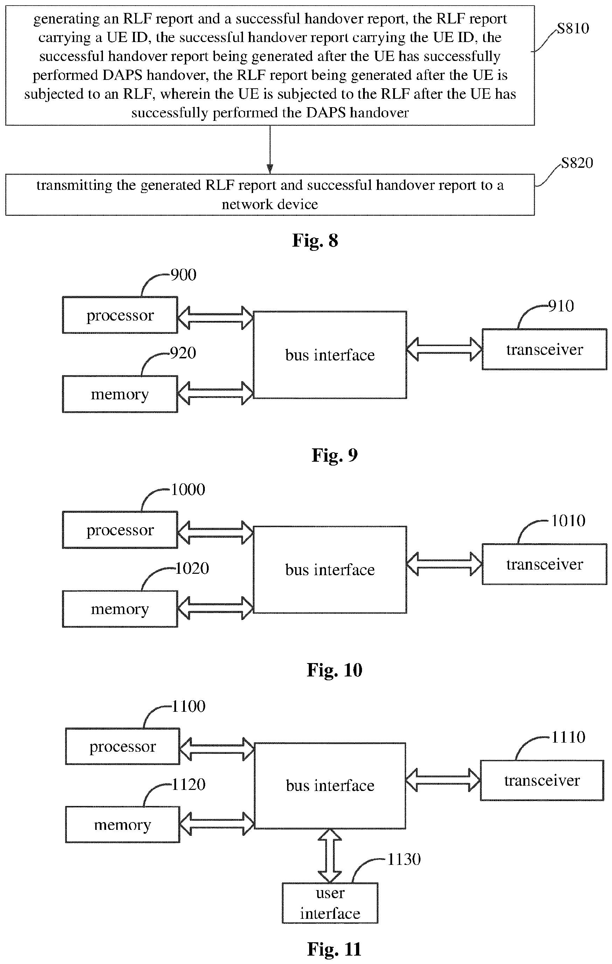

The present disclosure further provides in some embodiments a report processing method for a UE which, as shown in Fig. 8, includes: S810 of generating an RLF report and a successful handover report, the RLF report carrying a UE ID, the successful handover report carrying the UE ID, the successful handover report being generated after the UE has successfully performed DAPS handover, the RLF report being generated after the UE is subjected to an RLF, wherein the UE is subjected to the RLF after the UE has successfully performed the DAPS handover; and S820 of transmitting the generated RLF report and successful handover report to a network device.

In the implementation, apart from the successful handover report and the RLF report, the UE further records the UE ID, so it is unnecessary to add the UE ID in an interface message for transmitting the successful handover report or the RLF report. When the RLF reports and the successful handover reports are transmitted between the network nodes, the RLF report and the successful handover report belonging to a same UE are associated with each other in accordance with the UE IDs in the successful handover reports and the UE IDs in the RLF reports. As a result, it is able for the network node to accurately analyze a cause for a handover failure, and accurately analyze a failure type, thereby to effectively optimize a handover parameter.

In the embodiments of the present disclosure, the contents in the RLF report and the successful handover report as well as a specific procedure of transmitting the RLF report and the successful handover report between the network nodes may refer to Figs. 1 to 3 and those mentioned hereinabove, and thus will not be further particularly defined herein.

The present disclosure further provides in some embodiments a report processing method for a second network node, which includes transmitting an RLF report and a successful handover report associated with a target UE to a first network node.

According to the report processing method in the embodiments of the present disclosure, when the second network node transmits the RLF report and the successful handover report to the first network node, the RLF report and the successful handover report are associated with the target UE, i.e., the second network node indicates that the RLF report and the successful handover report are associated with a same target UE, to enable the first network node to analyze a failure type in accordance with the RLF report and the successful handover report associated with each other. As a result, it is able for the network node to accurately analyze the failure type, prevent the occurrence of an analysis error, and effectively optimize a handover parameter.

In the embodiments of the present disclosure, optionally, the RLF report and the successful handover report associated with the target UE are transmitted to the first network node in one of the following modes. In a first mode, the RLF report and the successful handover report associated with the target UE are transmitted to the first network node through a first interface message. In a second mode, the RLF report is transmitted to the first network node through a second interface message, the successful handover report is transmitted to the first network node through a third interface message, and each of the second interface message and the third interface message includes an ID of the target UE. In a third mode, the RLF report is transmitted to the first network node through the second interface message, the successful handover report is transmitted to the first network node through the third interface message, and each of the RLF report and the successful handover report includes the ID of the target UE.

In the embodiments of the present disclosure, optionally, the second network node is a node after the UE has performed DAPS handover, the first network node is a node before the UE performs the DAPS handover, the RLF report is obtained by the second network node from another network node, and the other network node is a network node to which the UE is reconnected after the UE is subjected to the RLF, wherein the UE is subjected to the RLF after the UE has successfully performed the DAPS handover. In the first mode, the second network node transmits the RLF report and the successful handover report simultaneously to the first network node through a same interface message (the first interface message), and the RLF report and the successful handover report transmitted simultaneously are associated with the target UE.

In the second mode, the second network node transmits the RLF report and the successful handover report to the first network node through different interface messages, and the interface messages for transmitting the RLF report and the successful handover report include the ID of the target UE. In this way, through the ID of the target UE in the interface messages, the RLF report and the successful handover report corresponding to the same target UE are associated with each other.

In the third mode, the second network node transmits the RLF reports and the successful handover reports to the first network node through different interface messages, and the RLF reports and the successful handover reports include the ID of target UE. In this way, through the ID of target UE, it is able to identify the RLF report and the successful handover report corresponding to the same target UE. Optionally, when the target UE generates the RLF report and the successful handover report, the ID of the target UE is written into the RLF report and the successful handover report. In other words, as compared with the related art, a content transmitted through an air interface is modified, and the RLF report or the successful handover report including the ID of the target UE is transmitted to the network node.

In the embodiments of the present disclosure, optionally, the RLF report and the successful handover report associated with the target UE are transmitted to the first network node through at least one of an XN interface, an X2 interface, an NG interface, or an S 1 interface.

In the embodiments of the present disclosure, optionally, the RLF report and the successful handover report associated with the target UE are transmitted to the first network node through at least one of a failure indication message, a handover report message, an access and mobility indication message, or a specific message.

The specific message is a predetermined message designated for indicating the transmission of the RLF report and the successful handover report.

According to the report processing method in the embodiments of the present disclosure, when the RLF reports and the successful handover reports are transmitted between the network nodes, the RLF report and the successful handover report belonging to a same UE are associated with each other, so that the network node jointly analyze the successful handover report and the RLF report belonging to the same UE. As a result, it is able to accurately analyze a cause for the handover failure, and accurately analyze the failure type, thereby to effectively optimize a handover parameter.

The present disclosure further provides in some embodiments a report processing method for a first network node, which includes: obtaining an RLF report and a successful handover report associated with a target UE; and analyzing a cause for an RLF or a cause for a handover failure in accordance with the RLF report and successful handover report.

According to the report processing method in the embodiments of the present disclosure, when the second network node transmits the RLF report and the successful handover report to the first network node, the RLF report and the successful handover report are associated with the target UE, i.e., the second network node indicates that the RLF report and the successful handover report are associated with a same target UE, to enable the first network node to analyze a failure type in accordance with the RLF report and the successful handover report associated with each other. As a result, it is able for the network node to accurately analyze the failure type, prevent the occurrence of an analysis error, and effectively optimize a handover parameter.

Optionally, the RLF report and the successful handover report associated with the target UE are obtained in one of the following modes: the RLF report and the successful handover report associated with the target UE are obtained from a second network node through a first interface message; the RLF report is obtained from a third network node through a second interface message, the successful handover report is obtained from a fourth network node through a third interface message, and each of the second interface message and the third interface message includes an ID of the target UE; the RLF report is obtained from the third network node through the second interface message, the successful handover report is obtained from the fourth network node through the third interface message, and each of the RLF report and the successful handover report includes the ID of the target UE.

It should be appreciated that, each of the second network node, the third network node and the fourth network node is a network node capable of transmitting the RLF report or successful handover report to the first network node. The second network node, the third network node and the fourth network node are merely used to differentiate the network nodes from each other, and they may include same or different network nodes.

Optionally, in the case that the RLF report and the successful handover report associated with the target UE are obtained from the second network node through the first interface message, the first interface message includes a report list, the report list includes the RLF reports and the successful handover reports associated with at least one UE, and the target UE is one of the at least one UE.

Optionally, in the case that the RLF report is obtained from the third network node through the second interface message, the second interface message includes a first report list, and the first report list includes the RLF reports of at least one UE. In the case that the successful handover report is obtained from the fourth network node through the third interface message, the third interface message includes a second report list, and the second report list includes the successful handover reports of the at least one UE. The target UE is one of the at least one UE.

Optionally, the first interface message, the second interface message and the third interface message are transmitted through at least one of a failure indication message, a handover report message, an access and mobility indication message, or a specific message.

Optionally, the first interface message, the second interface message and the third interface message are transmitted through at least one of an XN interface, an X2 interface, an NG interface or an S1 interface.

Optionally, the first network node is a source network node of the target UE, and the second network node is a target network node of the target UE; or the first network node is the source network node of the target UE, and each of the third network node and the fourth network node is one of the source network node, the target network node, or a network node other than the source network node and the target network node.

It should be appreciated that, in the embodiments of the present disclosure, the description has been given in conjunction with Figs. 5 and 6 when the network node for transmitting the RLF report and the successful handover report is the target network node. However, the scenario where the report processing method in the embodiments of the present disclosure is applied is not limited to that shown in Figs. 5 and 6, and the network node for transmitting the RLF report or the successful handover report to the source network node is not limited to the target network node, e.g., it may be any of the above-mentioned network nodes.

Optionally, the analyzing the cause for the RLF or the handover failure in accordance with the determined RLF report and successful handover report that have the association relationship includes analyzing the cause for the RLF or the handover failure as one of too-late handover, too-early handover or handover to wrong cell in accordance with the RLF report and the successful handover report.

It should be appreciated that, the above-mentioned description about the report processing method for the first network node may be applied to the report processing method for the second network node with a same technical effect, which will not be further particularly defined herein.

As shown in Fig. 9, the present disclosure further provides in some embodiments a network node. The network node is a first network node, and includes a processor 900, a transceiver 910, a memory 920, and a program stored in the memory 920 and executed by the processor 900. The transceiver 910 is coupled to the processor 900 and the memory 920 through a bus interface, and configured to receive and transmit data under the control of the processor 900. The processor 900 is configured to read the program in the memory, so as to: obtain RLF reports and successful handover reports; determine an RLF report and a successful handover report that have an association relationship; and analyze a cause for an RLF or a cause for a handover failure in accordance with the determined RLF report and successful handover report that have the association relationship.

In the embodiments of the present disclosure, optionally, when obtaining the RLF reports and the successful handover reports, the processor 900 is further configured to receive RLF reports and successful handover reports transmitted by a second network node through first interface messages, the second network node is a node after a UE has performed DAPS handover, the first network node is a node before the UE performs the DAPS handover, the RLF report is obtained by the second network node from another network node, and the other network node is a network node to which the UE is reconnected after the UE is subjected to the RLF, wherein the UE is subjected to the RLF after the UE has successfully performed the DAPS handover. The determining the RLF report and the successful handover report that have the association relationship includes determining an RLF report and a successful handover report transmitted in one of the first interface messages as the RLF report and the successful handover report that have the association relationship.

In the embodiments of the present disclosure, optionally, when determining the RLF report and the successful handover report transmitted in one of the first interface messages as the RLF report and the successful handover report that have the association relationship, the processor 900 is further configured to, when RLF reports and successful handover reports generated by different UEs are carried in one of the first interface messages, determine an RLF report and a successful handover report generated by a same UE as the RLF report and the successful handover report that have the association relationship.

In the embodiments of the present disclosure, optionally, when obtaining the RLF reports and the successful handover reports, the processor 900 is further configured to obtain the RLF reports through a second interface message and obtain the successful handover reports through a third interface message. The determining the RLF report and the successful handover report that have the association relationship includes: determining an RLF report corresponding to a first UE ID in accordance with the first UE ID carried in the second interface message, and determining a successful handover report corresponding to a second UE ID in accordance with the second UE ID carried in the third interface message; and when the first UE ID is the same as the second UE ID, determining the RLF report corresponding to the first UE ID and the successful handover report corresponding to the second UE ID as the RLF report and the successful handover report that have the association relationship.

In the embodiments of the present disclosure, optionally, the first interface message, the second interface message and the third interface message are each at least one of a failure indication message, a handover report message, an access and mobility indication message, or a specific message.

In the embodiments of the present disclosure, optionally, when obtaining the RLF reports and the successful handover reports, the processor 900 is specifically configured to obtain the RLF reports and the successful handover reports transmitted by a UE, the RLF reports carry UE IDs, and the successful handover reports carry UE IDs. The determining the RLF report and the successful handover report that have the association relationship specifically includes determining an RLF report and a successful handover report carrying a same UE ID as the RLF report and the successful handover report that have the association relationship in accordance with the UE IDs carried in the RLF reports and the UE IDs carried in the successful handover reports.

In Fig. 9, bus architecture may include a number of buses and bridges connected to each other, so as to connect various circuits for one or more processors 900 and one or more memories 920. In addition, as is known in the art, the bus architecture may be used to connect any other circuits, such as a circuit for a peripheral device, a circuit for a voltage stabilizer and a power management circuit. The bus interface may be provided, and the transceiver 910 may consist of a plurality of elements, i.e., a transmitter and a receiver for communication with any other devices over a transmission medium. The transmission medium includes a wireless channel, a wired channel, or an optical cable. The processor 900 may take charge of managing the bus architecture as well as general processings. The memory 920 may store therein data for the operation of the processor 900.

The processor 900 is a Central Processing Unit (CPU), an Application Specific Integrated Circuit (ASIC), a Field-Programmable Gate Array (FPGA) or a Complex Programmable Logic Device (CPLD). The processor may also use multi-core architecture.

Here, it should be appreciated that, the network node in the embodiments of the present disclosure is used to implement the steps of the report processing method for the first network node with a same technical effect, which will not be further particularly defined herein.

The present disclosure further provides in some embodiments a computer-readable storage medium storing therein a computer program. The computer program is executed by a processor so as to implement the steps of the report processing method for the network node (the first network node). The computer-readable storage medium is any available medium or data storage device capable of being accessed by the processor, which includes, but not limited to, a magnetic memory (e.g., floppy disk, hard disk, magnetic tape, or Magnetic Optical disk (MO)), an optical memory (e.g., Compact Disk (CD), Digital Versatile Disk (DVD), Blue-ray Disk (BD), or High-definition Versatile Disk (HVD)), or a semiconductor memory (e.g., Read-Only Memory (ROM), Electrically Programmable ROM (EPROM), Electrically Erasable PROM (EEPROM), NAND flash, or Solid-State Disk or Solid State Drive (SSD)).

As shown in Fig. 10, the present disclosure further provides in some embodiments a network node. The network node is a second network node, and includes a processor 1000, a transceiver 1010, a memory 1020, and a program stored in the memory 1020 and executed by the processor 1000. The transceiver 1010 is coupled to the processor 1000 and the memory 1020 through a bus interface, and configured to receive and transmit data under the control of the processor 1000. The processor 1000 is configured to read the program in the memory, so as to: obtain RLF reports and successful handover reports; and transmit an RLF report and a successful handover report that have an association relationship to a first network node, to enable the first network node to analyze a cause for an RLF or a cause for a handover failure in accordance with the RLF report and the successful handover report that have the association relationship.

In the embodiments of the present disclosure, optionally, when obtaining the successful handover reports, the processor 1000 is specifically configured to receive the successful handover reports transmitted by a UE, and the successful handover reports are generated after the UE has successfully performed DAPS handover. When obtaining the RLF reports, the processor is specifically configured to receive the RLF reports transmitted by another network node, the RLF reports are generated after the UE is subjected to an RLF, the UE is subjected to the RLF after the UE has successfully performed the DAPS handover, and the other network node is a network node to which the UE is reconnected after the UE is subjected to the RLF after the UE has successfully performed the DAPS handover.

In the embodiments of the present disclosure, optionally, when transmitting the RLF report and the successful handover report that have the association relationship to the first network node, the processor 1000 is specifically configured to: identify the RLF report and the successful handover report that have the association relationship, the RLF report and the successful handover report that have the association relationship being generated by a same UE; and transmit the identified RLF report and successful handover report that have the association relationship to the first network node.

In Fig. 10, bus architecture may include a number of buses and bridges connected to each other, so as to connect various circuits for one or more processors 1000 and one or more memories 1020. In addition, as is known in the art, the bus architecture may be used to connect any other circuits, such as a circuit for a peripheral device, a circuit for a voltage stabilizer and a power management circuit. The bus interface may be provided, and the transceiver 1010 may consist of a plurality of elements, i.e., a transmitter and a receiver for communication with any other devices over a transmission medium. The transmission medium includes a wireless channel, a wired channel, or an optical cable. The processor 1000 may take charge of managing the bus architecture as well as general processings. The memory 1020 may store therein data for the operation of the processor 1000.

The processor 1000 is a CPU, an ASIC, an FPGA or a CPLD. The processor may also use multi-core architecture.

Here, it should be appreciated that, the network node in the embodiments of the present disclosure is used to implement the steps of the report processing method for the second network node with a same technical effect, which will not be further particularly defined herein.

The present disclosure further provides in some embodiments a computer-readable storage medium storing therein a computer program. The computer program is executed by a processor so as to implement the steps of the report processing method for the network node (the second network node). The computer-readable storage medium is any available medium or data storage device capable of being accessed by the processor, which includes, but not limited to, a magnetic memory (e.g., floppy disk, hard disk, magnetic tape, or MO), an optical memory (e.g., CD, DVD, BD, or HVD), or a semiconductor memory (e.g., ROM, EPROM, EEPROM, NAND flash, or SSD).

As shown in Fig. 11, the present disclosure provides in some embodiments a UE, which includes a processor 1100, a transceiver 1110, a memory 1120, and a program stored in the memory 1120 and executed by the processor 1100. The transceiver 1110 is coupled to the processor 1100 and the memory 1120 through a bus interface, and coupled to receive and transmit data under the control of the processor 1100. The processor 1100 is configured to read the program in the memory, so as to: generate an RLF report and a successful handover report, the RLF report carrying a UE ID, the successful handover report carrying a UE ID, the successful handover report being generated after the UE has successfully performed DAPS handover, the RLF report being generated after the UE is subjected to an RLF, wherein the UE is subjected to the RLF after the UE has successfully performed the DAPS handover; and transmit the generated RLF report and successful handover report to a network device.

In Fig. 11, bus architecture may include a number of buses and bridges connected to each other, so as to connect various circuits for one or more processors 1100 and one or more memories 1120. In addition, as is known in the art, the bus architecture may be used to connect any other circuits, such as a circuit for a peripheral device, a circuit for a voltage stabilizer and a power management circuit. The bus interface may be provided, and the transceiver 1110 may consist of a plurality of elements, i.e., a transmitter and a receiver for communication with any other devices over a transmission medium. The transmission medium includes a wireless channel, a wired channel, or an optical cable. With respect to different UEs, a user interface 1130 may also be provided for devices which are to be arranged inside or outside the UE, and these devices may include but not limited to a keypad, a display, a speaker, a microphone and a joystick.

The processor 1100 may take charge of managing the bus architecture as well as general processings. The memory 1120 may store therein data for the operation of the processor 1100.

Optionally, the processor 1100 is a CPU, an ASIC, an FPGA or a CPLD. The processor may also use multi-core architecture.

The present disclosure further provides in some embodiments a computer-readable storage medium storing therein a computer program. The computer program is used to be executed by a processor so as to implement the steps of the report processing method for the UE. The computer-readable storage medium is any available medium or data storage device capable of being accessed by the processor, which includes, but not limited to, a magnetic memory (e.g., floppy disk, hard disk, magnetic tape, or MO), an optical memory (e.g., CD, DVD, BD, or HVD), or a semiconductor memory (e.g., ROM, EPROM, EEPROM, NAND flash, or SSD).

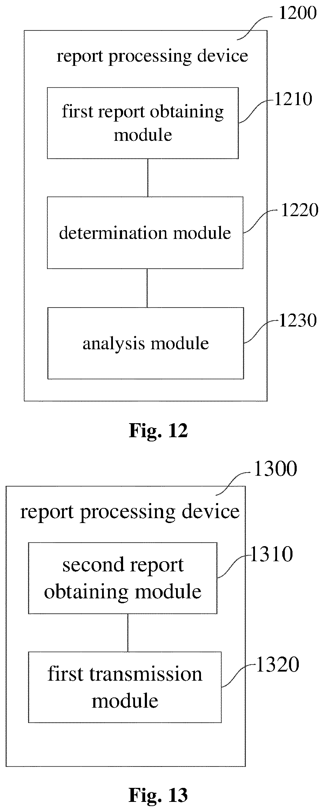

The present disclosure further provides in some embodiments a report processing device 1200 for a first network node which, as shown in Fig. 12, includes: a first report obtaining module 1210 configured to obtain RLF reports and successful handover reports; a determination module 1220 configured to determine an RLF report and a successful handover report that have an association relationship; and an analysis module 1230 configured to analyze a cause for an RLF or a cause for a handover failure in accordance with the determined RLF report and successful handover report that have the association relationship.

In the embodiments of the present disclosure, optionally, when obtaining the RLF reports and the successful handover reports, the first report obtaining module 1210 is further configured to receive RLF reports and successful handover reports transmitted by a second network node through first interface messages, the second network node is a node after a UE has performed DAPS handover, the first network node is a node before the UE performs the DAPS handover, the RLF report is obtained by the second network node from another network node, and the other network node is a network node to which the UE is reconnected after the UE is subjected to the RLF, wherein the UE is subjected to the RLF after the UE has successfully performed the DAPS handover. When determining the RLF report and the successful handover report that have the association relationship, the determination module 1220 is further configured to determine an RLF report and a successful handover report transmitted in one of the first interface messages as the RLF report and the successful handover report that have the association relationship.

In the embodiments of the present disclosure, optionally, when determining the RLF report and the successful handover report transmitted in one of the first interface messages as the RLF report and the successful handover report that have the association relationship, the determination module 1220 is further configured to, when RLF reports and successful handover reports generated by different UEs are carried in one of the first interface messages, determine an RLF report and a successful handover report generated by a same UE as the RLF report and the successful handover report that have the association relationship.

In the embodiments of the present disclosure, optionally, when obtaining the RLF reports and the successful handover reports, the first report obtaining module 1210 is further configured to obtain the RLF reports through a second interface message and obtaining the successful handover reports through a third interface message. When determining the RLF report and the successful handover report that have the association relationship, the determination module 1220 is further configured to: determine an RLF report corresponding to a first UE ID in accordance with the first UE ID carried in the second interface message, and determine a successful handover report corresponding to a second UE ID in accordance with the second UE ID carried in the third interface message; and when the first UE ID is the same as the second UE ID, determine the RLF report corresponding to the first UE ID and the successful handover report corresponding to the second UE ID as the RLF report and the successful handover report that have the association relationship.

In the embodiments of the present disclosure, optionally, the first interface message, the second interface message and the third interface message are each at least one of a failure indication message, a handover report message, an access and mobility indication message, or a specific message.

In the embodiments of the present disclosure, optionally, when obtaining the RLF reports and the successful handover reports, the first report obtaining module 1210 is specifically configured to obtain the RLF reports and the successful handover reports transmitted by a UE, the RLF reports carry UE IDs, and the successful handover reports carry UE IDs. When determining the RLF report and the successful handover report that have the association relationship, the determination module 1220 is specifically configured to determine an RLF report and a successful handover report carrying a same UE ID as the RLF report and the successful handover report that have the association relationship in accordance with the UE IDs carried in the RLF reports and the UE IDs carried in the successful handover reports.

The present disclosure further provides in some embodiments a report processing device 1300 for a second network device which, as shown in Fig. 13, includes: a second report obtaining module 1310 configured to obtain RLF reports and successful handover reports; and a first transmission module 1320 configured to transmit an RLF report and a successful handover report that have an association relationship to a first network node, to enable the first network node to analyze a cause for an RLF or a cause for a handover failure in accordance with the RLF report and the successful handover report that have the association relationship.

In the embodiments of the present disclosure, optionally, when obtaining the successful handover reports, the second report obtaining module 1310 is specifically configured to receive the successful handover reports transmitted by a UE, and the successful handover reports are generated after the UE has successfully performed DAPS handover. When obtaining the RLF reports, the second report obtaining module 1310 is specifically configured to receive the RLF reports transmitted by another network node, the RLF reports are generated after the UE is subjected to an RLF, the UE is subjected to the RLF after the UE has successfully performed the DAPS handover, and the other network node is a network node to which the UE is reconnected after the UE is subjected to the RLF after the UE has successfully performed the DAPS handover.

In the embodiments of the present disclosure, optionally, when transmitting the RLF report and the successful handover report that have the association relationship to the first network node, the first transmission module 1320 is specifically configured to: identify the RLF report and the successful handover report that have the association relationship, the RLF report and the successful handover report that have the association relationship being generated by a same UE; and transmit the identified RLF report and successful handover report that have the association relationship to the first network node.

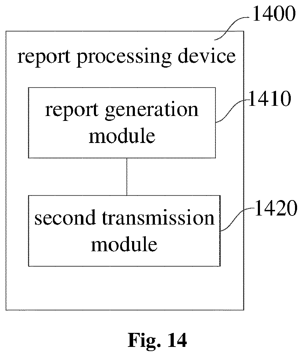

The present disclosure further provides in some embodiments a report processing device 1400 for a UE which, as shown in Fig. 14, includes: a report generation module 1410 configured to generate an RLF report and a successful handover report, the RLF report carrying a UE ID, the successful handover report carrying a UE ID, the successful handover report being generated after the UE has successfully performed DAPS handover, the RLF report being generated after the UE is subjected to an RLF, wherein the UE is subjected to the RLF after the UE has successfully performed the DAPS handover; and a second transmission module 1420 configured to transmit the generated RLF report and successful handover report to a network device.

It should be appreciated that, the modules (units) in the embodiments of the present disclosure are for illustrative purposes, and they are provided merely on the basis of their logic functions. The modules may be integrated in a processing module, or physically separated from each other, or two or more modules may be integrated in one module. The integrated modules may be implemented in the form of hardware or a software functional module.

In the case that the integrated modules are implemented in a software form and sold or used as a separate product, they may be stored in a computer-readable medium. Based on this, the technical solutions of the present disclosure, partial or full, or parts of the technical solutions of the present disclosure contributing to the related art, may appear in the form of software products, which may be stored in a storage medium and include several instructions so as to enable computer equipment (a personal computer, a server or network equipment) to execute all or parts of the steps of the method according to the embodiments of the present disclosure. The storage medium includes any medium capable of storing therein program codes, e.g., a universal serial bus (USB) flash disk, a mobile hard disk (HD), a read-only memory (ROM), a random access memory (RAM), a magnetic disk or an optical disk.

It should be appreciated that, the above-mentioned report processing devices in the embodiments of the present disclosure correspond to the above-mentioned report processing methods respectively, and the implementation of the report processing devices may refer to that of the above-mentioned report processing methods with a same technical effect.

It should be appreciated that, the units in the embodiments of the present disclosure are for illustrative purposes, and they are provided merely on the basis of their logic functions. The modules may be integrated in a processing module, or physically separated from each other, or two or more modules may be integrated in one module. The integrated modules may be implemented in the form of hardware or a software functional module.

In the case that the integrated modules are implemented in a software form and sold or used as a separate product, they may be stored in a computer-readable medium. Based on this, the technical solutions of the present disclosure, partial or full, or parts of the technical solutions of the present disclosure contributing to the related art, may appear in the form of software products, which may be stored in a storage medium and include several instructions so as to enable computer equipment (a personal computer, a server or network equipment) to execute all or parts of the steps of the method according to the embodiments of the present disclosure. The storage medium includes any medium capable of storing therein program codes, e.g., a universal serial bus (USB) flash disk, a mobile hard disk (HD), a read-only memory (ROM), a random access memory (RAM), a magnetic disk or an optical disk.

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to disk memory and optical memory) including computer-readable program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicated computer, an embedded processor or any other programmable data processing devices to create a machine, so that instructions capable of being executed by the processor of the computer or the other programmable data processing devices may create a device to achieve the functions assigned in one or more work flows in the flow chart and/or one or more blocks in the block diagram.

These computer program instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These computer program instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

It should be further appreciated that, the above modules in the network device and the UE are divided merely on the basis of their logic functions, and in actual use, they may be completely or partially integrated into a physical entity, or physically separated from each other. These modules may be implemented by calling software through a processing element, or implemented in the form of hardware. For example, the determination module may be a processing element arranged separately, or integrated into a chip of the above-mentioned device. In addition, the determination module may be stored in the memory of the above-mentioned device in the form of a program code, and may be called and executed by a processing element of the above-mentioned device so as to achieve the above functions. The other modules may be implemented in a similar manner. All or parts of the modules may be integrated together or arranged separately. Here, the modules, units or assemblies may each of an Integrated Circuit (IC) having a signal processing capability. In the implementation, the steps of the method or the modules may be implemented through an integrated logic circuit of the processing element in the form of hardware or through instructions in the form of software.

For example, the above modules, units, sub-units or sub-modules may be one or more ICs capable of implementing the above-mentioned method, e.g., one or more Application Specific Integrated Circuits (ASICs), one or more Digital Signal Processors (DSPs), or one or more Field Programmable Gate Array (FPGA). For another example, when a certain module is implemented by calling a program code through a processing element, the processing element may be a general-purpose processor, e.g., a Central Processing Unit (CPU) or any other processor capable of calling the program code. These modules may be integrated together and implemented in the form of system-on-a-chip (SOC).

Such words as "first" and "second" involved in the specification and the appended claims are merely used to differentiate different objects rather than to represent any specific order. It should be appreciated that, the data used in this way may be replaced with each other, so as to implement the embodiments in an order other than that shown in the drawings or described in the specification. In addition, such terms as "include" or "including" or any other variations involved in the present disclosure intend to provide non-exclusive coverage, so that a procedure, method, system, product or device including a series of steps or units may also include any other elements not listed herein, or may include any inherent steps or units of the procedure, method, system, product or device. The expression "and/or" in the description and the appended claims is merely used to represent at least one of the objects before and after the expression. For example, "A and/or B and/or C" represents seven situations, i.e., there is only A, there is only B, there is only C, there are both A and B, there are both B and C, there are both A and C, and there are A, B and C. Similarly, the phrase "at least one of A or B" in the specification and the appended claims shall be understood as "there is only A, there is only B, or there are both A and B".

Obviously, a person skilled in the art can make various modifications and variations to the present disclosure without departing from the spirit and scope of the disclosure. In this way, if these modifications and variations of the present disclosure fall within the scope of the claims of the present disclosure and equivalent technologies, the present disclosure is also intended to include these modifications and variations.

## Claims

1. A report processing method for a User Equipment (UE), comprising:
generating a Radio Link Failure (RLF) report and a successful handover report, the RLF report carrying a UE Identity (ID), the successful handover report carrying the UE ID, the successful handover report being generated after the UE has successfully performed Dual Active Protocol Stack (DAPS) handover, the RLF report being generated after the UE is subjected to an RLF, wherein the UE is subjected to the RLF after the UE has successfully performed the DAPS handover;
transmitting the generated RLF report and successful handover report to a network device.

2. A report processing method for a first network node, comprising:
obtaining RLF reports and successful handover reports;
determining the RLF report and the successful handover report that have an association relationship;
analyzing a cause for an RLF or a cause for a handover failure in accordance with the determined RLF report and successful handover report that have the association relationship.

3. The report processing method according to claim 2, wherein the obtaining the RLF reports and the successful handover reports comprises:
receiving, through first interface messages, RLF reports and successful handover reports transmitted by a second network node, wherein the second network node is a node after a UE has performed DAPS handover, the first network node is a node before the UE performs the DAPS handover, the RLF report is obtained by the second network node from another network node, and the other network node is a network node to which the UE is reconnected after the UE is subjected to the RLF, wherein the UE is subjected to the RLF after the UE has successfully performed the DAPS handover,
wherein the determining the RLF report and the successful handover report that have the association relationship comprises:
determining an RLF report and a successful handover report transmitted in one of the first interface messages as the RLF report and the successful handover report that have the association relationship.

4. The report processing method according to claim 3, wherein the determining the RLF report and the successful handover report transmitted in the one of the first interface messages as the RLF report and the successful handover report that have the association relationship comprises:
when RLF reports and successful handover reports generated by different UEs are carried in the one of the first interface messages, determining an RLF report and a successful handover report generated by a same UE as the RLF report and the successful handover report that have the association relationship.

5. The report processing method according to claim 2, wherein the obtaining the RLF reports and the successful handover reports comprises:
obtaining the RLF reports through a second interface message, and obtaining the successful handover reports through a third interface message,
wherein the determining the RLF report and the successful handover report that have the association relationship comprises:
determining an RLF report corresponding to a first UE ID in accordance with the first UE ID carried in the second interface message, and determining a successful handover report corresponding to a second UE ID in accordance with the second UE ID carried in the third interface message;
when the first UE ID is the same as the second UE ID, determining the RLF report corresponding to the first UE ID and the successful handover report corresponding to the second UE ID as the RLF report and the successful handover report that have the association relationship.

6. The report processing method according to any one of claims 3 to 5, wherein the first interface message, the second interface message and the third interface message are each at least one of a failure indication message, a handover report message, an access and mobility indication message, or a specific message.

7. The report processing method according to claim 2, wherein the obtaining the RLF reports and the successful handover reports comprises:
obtaining the RLF reports and the successful handover reports transmitted by a UE, wherein the RLF reports carry UE IDs, and the successful handover reports carry UE IDs,
wherein the determining the RLF report and the successful handover report that have the association relationship comprises:
determining, in accordance with the UE IDs carried in the RLF reports and the UE IDs carried in the successful handover reports, an RLF report and a successful handover report carrying a same UE ID as the RLF report and the successful handover report that have the association relationship.

8. A report processing method for a second network node, comprising:
obtaining RLF reports and successful handover reports;
transmitting an RLF report and a successful handover report that have an association relationship to a first network node, to enable the first network node to analyze a cause for an RLF or a cause for a handover failure in accordance with the RLF report and the successful handover report that have the association relationship.

9. The report processing method according to claim 8, wherein the obtaining the successful handover reports comprises:
receiving the successful handover reports transmitted by a UE, wherein the successful handover reports are generated after the UE has successfully performed DAPS handover,
wherein the obtaining the RLF reports comprises:
receiving the RLF reports transmitted by another network node, wherein the RLF reports are generated after the UE is subjected to an RLF after the UE has successfully performed the DAPS handover, and the other network node is a network node to which the UE is reconnected after the UE is subjected to the RLF after the UE has successfully performed the DAPS handover.

10. The report processing method according to claim 8 or 9, wherein the transmitting the RLF report and the successful handover report that have the association relationship to the first network node comprises:
identifying the RLF report and the successful handover report that have the association relationship, the RLF report and the successful handover report that have the association relationship being generated by a same UE;
transmitting the identified RLF report and successful handover report that have the association relationship to the first network node.

11. A UE, comprising a memory, a transceiver and a processor, wherein the memory is configured to store therein a computer program, and the transceiver is configured to transmit and receive data under the control of the processor,
wherein the processor is configured to read the computer program in the memory to:
generate an RLF report and a successful handover report, the RLF report carrying a UE ID, the successful handover report carrying the UE ID, the successful handover report being generated after the UE has successfully performed DAPS handover, the RLF report being generated after the UE is subjected to an RLF, wherein the UE is subjected to the RLF after the UE has successfully performed the DAPS handover;
transmit the generated RLF report and successful handover report to a network device.

12. A network node, the network node being a first network node and comprising a memory, a transceiver and a processor, wherein the memory is configured to store therein a computer program, and the transceiver is configured to receive and transmit data under the control of the processor,
wherein the processor is configured to read the computer program in the memory to:
obtain RLF reports and successful handover reports;
determine the RLF report and the successful handover report that have an association relationship;
analyze a cause for an RLF or a cause for a handover failure in accordance with the determined RLF report and successful handover report that have the association relationship.

13. The network node according to claim 12, wherein the obtaining the RLF reports and the successful handover reports comprises:
receiving, through first interface messages, RLF reports and successful handover reports transmitted by a second network node, wherein the second network node is a node after a UE has performed DAPS handover, the first network node is a node before the UE performs the DAPS handover, the RLF report is obtained by the second network node from another network node, and the other network node is a network node to which the UE is reconnected after the UE is subjected to the RLF, wherein the UE is subjected to the RLF after the UE has successfully performed the DAPS handover,
wherein the determining the RLF report and the successful handover report that have the association relationship comprises:
determining an RLF report and a successful handover report transmitted in one of the first interface messages as the RLF report and the successful handover report that have the association relationship.

14. The network node according to claim 13, wherein the determining the RLF report and the successful handover report transmitted in the one of the first interface messages as the RLF report and the successful handover report that have the association relationship comprises:
when RLF reports and successful handover reports generated by different UEs are carried in the one of the first interface messages, determining an RLF report and a successful handover report generated by a same UE as the RLF report and the successful handover report that have the association relationship.

15. The network node according to claim 12, wherein the obtaining the RLF reports and the successful handover reports comprises:
obtaining the RLF reports through a second interface message, and obtaining the successful handover reports through a third interface message,
wherein the determining the RLF report and the successful handover report that have the association relationship comprises:
determining an RLF report corresponding to a first UE ID in accordance with the first UE ID carried in the second interface message, and determining a successful handover report corresponding to a second UE ID in accordance with the second UE ID carried in the third interface message;
when the first UE ID is the same as the second UE ID, determining the RLF report corresponding to the first UE ID and the successful handover report corresponding to the second UE ID as the RLF report and the successful handover report that have the association relationship.

16. The network node according to claim 12, wherein the obtaining the RLF reports and the successful handover reports comprises:
obtaining the RLF reports and the successful handover reports transmitted by a UE, wherein the RLF reports carry UE IDs, and the successful handover reports carry UE IDs,
wherein the determining the RLF report and the successful handover report that have the association relationship comprises:
determining, in accordance with the UE IDs carried in the RLF reports and the UE IDs carried in the successful handover reports, an RLF report and a successful handover report carrying a same UE ID as the RLF report and the successful handover report that have the association relationship.

17. A network node, the network node being a second network node and comprising a memory, a transceiver and a processor, wherein the memory is configured to store therein a computer program, and the transceiver is configured to receive and transmit data under the control of the processor,
wherein the processor is configured to read the computer program in the memory to:
obtain RLF reports and successful handover reports;
transmit an RLF report and a successful handover report that have an association relationship to a first network node, to enable the first network node to analyze a cause for an RLF or a cause for a handover failure in accordance with the RLF report and the successful handover report that have the association relationship.

18. The network node according to claim 17, wherein the transmitting the RLF report and the successful handover report that have the association relationship to the first network node comprises:
identifying the RLF report and the successful handover report that have the association relationship, the RLF report and the successful handover report that have the association relationship being generated by a same UE;
transmitting the identified RLF report and successful handover report that have the association relationship to the first network node.

19. A report processing device for a UE, comprising:
a report generation module configured to generate an RLF report and a successful handover report, the RLF report carrying a UE ID, the successful handover report carrying a UE ID, the successful handover report being generated after the UE has successfully performed DAPS handover, the RLF report being generated after the UE is subjected to an RLF, wherein the UE is subjected to the RLF after the UE has successfully performed the DAPS handover;
a second transmission module configured to transmit the generated RLF report and successful handover report to a network device.

20. A report processing device for a first network node, comprising:
a first report obtaining module configured to obtain RLF reports and successful handover reports;
a determination module configured to determine the RLF report and the successful handover report that have an association relationship; and
an analysis module configured to analyze a cause for an RLF or a cause for a handover failure in accordance with the determined RLF report and successful handover report that have the association relationship.

21. A report processing device for a second network node, comprising:
a second report obtaining module configured to obtain RLF reports and successful handover reports; and
a first transmission module configured to transmit an RLF report and a successful handover report that have an association relationship to a first network node, to enable the first network node to analyze a cause for an RLF or a cause for a handover failure in accordance with the RLF report and the successful handover report that have the association relationship.

22. A computer-readable storage medium storing herein a computer program, wherein the computer program is used to be executed by a computer to implement the report processing method according to claim 1, or the report processing method according to any one of claims 2 to 7, or the report processing method according to any one of claims 8 to 10.
